**Europäisches Patentamt**

**European Patent Office**

**Office européen des brevets**

(19)

(11) Veröffentlichungsnummer: **0 081 126 B1**

(12) **EUROPÄISCHE PATENTSCHRIFT**

(45) Veröffentlichungstag der Patentschrift: 29.04.87

(51) Int. Cl.⁴: **C 08 C 1/075**, C 08 L 21/02

(21) Anmeldenummer: **82110731.5**

(22) Anmeldetag: **20.11.82**

(54) **Verfahren zum Aufkonzentrieren wässriger Dispersionen von Polymerisaten konjugierter Diene.**

(30) Priorität: **04.12.81 DE 3148105**

(43) Veröffentlichungstag der Anmeldung: **15.06.83 Patentblatt 83/24**

(45) Bekanntmachung des Hinweises auf die Patenterteilung: **29.04.87 Patentblatt 87/18**

(84) Benannte Vertragsstaaten: **BE DE FR GB IT NL**

(56) Entgegenhaltungen: **EP-A-0 036 904**

**D.C. BLACKLEY: "High polymer latices", Band 1, 1966, Seiten 296-300, MacLaren & Sons Ltd., London, G.B.**

(73) Patentinhaber: **BAYER AG, Konzernverwaltung RP Patentabteilung, D-5090 Leverkusen 1 Bayerwerk (DE)**

(72) Erfinder: **Schmidt, Adolf, Dr., Roggendorfstrasse 67, D-5000 Köln 80 (DE)**

**Beschreibung**

Die Erfindung betrifft ein Verfahren zur Herstellung einer unter Normalbedingungen fließfähigen, wäßrigen Dispersion auf Basis von Homo- und Copolymerisaten konjugierter Diene mit Feststoffgehalten von 35 bis 55 Gew.-% und durchschnittlichen Teilchendurchmessern von 20 bis 150 nm aus einer nach üblichen Verfahren hergestellten unter Normalbedingungen fließfähigen, von Alkanpolysulfonaten freien wäßrigen Dispersion auf Basis von Homo- und Copolymerisaten konjugierter Diene mit einem Feststoffgehalt von 25 bis 35 Gew.-% und durchschnittlichen Teilchendurchmessern von 20 bis 150 nm durch Aufkonzentrieren in Gegenwart eines wasserlöslichen Salzes mindestens eines Alkanpolysulfonats.

Es ist bekannt, daß zur Herstellung von wäßrigen Homo- und Copolymerisatdispersionen auf Basis von Butadien durch Polymerisation stets bestimmte Mengen an Elektrolyten wie z.B. Kaliumchlorid verwendet werden müssen, um einen fließenden und nicht pastenartigen Latex (Dispersion) zu erhalten (vgl. Houben Weyl, Methoden der organische Chemie, Band XIV/1, 1961, Seite 722, Zeile 4). So enthalten die Rezepturen der klassischen Kaltkautschukansätze (vgl. Houben Weyl wie oben, Band XIV/1, 1961, Seite 716 und Seite 717) wie auch die Ansätze mit Aminaktivierung (vgl. Houben Weyl, 1961, Band XIV/1, Seite 727) stets Elektrolyte wie Kaliumchlorid oder Alkaliphosphate. Daneben werden noch Natriumsalze von mit Formaldehyd kondensierten Naphthalinsulfonsäuren als Polymerisationshilfsmittel eingesetzt.

Nach diesen Polymerisationsverfahren lassen sich Latices mit Teilchengrößen von etwa 50 nm und Feststoffgehalten von ca. 25 bis 30 Gew.-% herstellen, welche unter Normalbedingungen frei fließen. Wird jedoch der Feststoffgehalt wesentlich über 30 Gew.-% angehoben, so werden auch diese Ansätze pastös. Um diesen Mangel zu beheben, wäre es denkbar, den Elektrolytgehalt und/oder den Gehalt an mit Formaldehyd kondensierten Naphthalinsulfonsäuren zu erhöhen.

Eine Erhöhung des Elektrolytgehalts über die üblicherweise verwendeten Mengen hinaus führt jedoch zur unerwünschten Koagulatbildung sowie zu einer drastischen Herabsetzung der Polymerisationsgeschwindigkeit. Erhöhte Mengen der Natriumsalze von mit Formaldehyd kondensierten Naphthalinsulfonsäuren tragen zur unerwünschten Dunkelfärbung der Latices bei. Ein weiterer Nachteil dieser Kondensationsprodukte liegt in ihrer mangelnden biologischen Abbaubarkeit und schafft somit Abwasserprobleme.

Aufgabe der vorliegenden Erfindung war es, aus nach üblichen Polymerisationsverfahren hergestellten, einen Feststoffgehalt von 25 bis 35 Gew.-% und einen Latexteilchendurchmesser von 20 bis 150 nm aufweisenden, unter Normalbedingungen frei fließfähigen wäßrigen Dispersionen auf Basis von Homo- und Copolymerisaten konjugierter Diene entsprechende, unter Normalbedingungen frei fließfähige, koagulatfreie Dispersionen mit einem Feststoffgehalt von 35 bis 55 Gew.-% herzustellen, ohne daß die Teilchengröße wesentlich verändert wird. Natürlich sollten die für die Lösung dieser Aufgabe gegebenenfalls erforderlichen Zusätze auch keine Dunkelfärbung der Dispersionen oder starke Schaumbildung bewirken oder zusätzliche Probleme bei der Abwasseraufbereitung schaffen, das heißt, sie sollten biologisch abbaubar sein.

Die Aufgabe wurde dadurch gelöst, daß in einer 25 bis 35 Gew.-% Feststoffgehalt und einen Latexteilchendurchmesser von 20 bis 150 nm aufweisenden, unter Normalbedingungen fließfähigen, nach üblichen Verfahren hergestellten, von Salzen von Alkanpolysulfonat freien, wäßrigen Dispersion auf Basis von Homo- und Copolymerisaten konjugierter Diene eine geringe Menge eines wasserlöslichen Salzes mindestens eines Alkanpolysulfonats gelöst wird und der Dispersion Wasser bis zum gewünschten Feststoffgehalt entzogen wird.

Aus der EP-A-0 036 904 (& DE-A-30 12 821) ist es zwar unter anderem bekannt, auch Polybutadien- und Polychloroprenlatices mit Feststoffgehalten bis über 50 Gew.-% herzustellen, indem ein Emulgatorsystem in üblichen Mengen (ca. 1 bis 5 Gew.-%, bezogen auf Monomere) bei der Polymerisation eingesetzt wird, das zu 50 bis 100 Gew.-% aus dem Alkalisalz eines Alkanpolysulfonats besteht. Hierbei werden jedoch Latices erhalten, die wegen ihrer Grobteiligkeit (durchschnittliche Latexteilchendurchmesser etwa 150 bis 500 nm) unter Normalbedingungen fließfähig sind. Gemäß der zitierten Schrift werden während der Polymerisation mit zunehmendem Anteil an Alkalisalzen eines Alkanpolysulfonats im Emulgatorsystem die Polymerisatteilchendurchmesser in der Dispersion so erhöht, daß ohne Koagulatbildung grobteilige und damit fließfähige Dispersionen mit hohem Feststoffgehalt entstehen.

Der zitierten Schrift war jedoch nicht zu entnehmen, und es wurde durch sie auch nicht nahegelegt, daß ein geringer Zusatz eines wasserlöslichen Salzes eines Alkanpolysulfonats zu einer nach üblichen Verfahren hergestellten, von Alkanpolysulfonatsalzen freien, unter Normalbedingungen fließfähigen, wäßrigen Dispersion auf Basis von Homo- und Copolymerisaten konjugierter Diene es erlaubt, den Feststoffgehalt einer solchen Dispersion durch Aufkonzentrieren ohne Koagulatbildung und Schaumbildung drastisch heraufzusetzen und deren Fließfähigkeit zu erhalten, ohne dabei die Latexteilchengröße zu verändern.

Gegenstand der vorliegenden Erfindung ist somit ein Verfahren zur Herstellung einer unter Normalbedingungen fließfähigen, wäßrigen Dispersion auf Basis von Homo- und Copolymerisaten konjugierter Diene mit Feststoffgehalten von 35 bis 55 Gew.-% und durchschnittlichen Latexteilchendurchmessern von 20 bis 150 nm, dadurch gekennzeichnet, daß in einer nach üblichen Verfahren hergestellten, unter Normalbedingungen fließfähigen, von Alkanpolysulfonatsalzen freien, wäßrigen Dispersion auf Basis von Homo- und Copolymerisaten konjugierter Diene mit einem Feststoffgehalt von 25 bis 35 Gew.-% und durchschnittlichen Teilchendurchmessern von 20 bis 150 nm 0,05 bis 5 Gew.%, bezogen auf Polymerisat, eines wasserlöslichen Salzes mindestens eines Alkanpolysulfonats in Form einer verdünnten wäßrigen Lösung

2

gleichmäßig verteilt und in der wäßrigen Phase der Dispersion gelöst wird, und Wasser bis zum gewünschten Feststoffgehalt entzogen wird.

Unter dem Ausdruck "unter Normalbedingungen fließfähig" wird in der vorliegenden Anmeldung eine Viskosität von kleiner als 50 000 mPas, insbesondere kleiner als 30 000 mPas, gemessen bei Atmosphärendruck (ca. 1 bar) und 22°C (Zimmertemperatur) in einem Brookfield-Rotationsviskosimeter Spindel 4 bei 6 RPM (Umdrehungen pro Minute), verstanden.

Vorzugsweise besitzen die erfindungsgemäß erhaltenen und die für das Verfahren der Erfindung eingesetzten Dispersionen einen durchschnittlichen Latexteilchendurchmesser von 25 bis 100 nm, das heißt, sie sind äußerst feinteilig.

Die konjugierten Diene besitzen vorzugsweise 4 bis 6 C-Atome und können durch ein oder zwei Chloratome substituiert sein. Besonders bevorzugt sind Butadien, Isopren und Chlorbutadien (Chloropren), insbesondere Butadien.

Die Copolymerisate der konjugierten Diene enthalten neben polymerisierten Dieneinheiten copolymerisierte Einheiten von vorzugsweise Acrylnitril, Styrol, Methylstyrol, (Meth)Acrylsäureestern mit vorzugsweise 1 bis 4 C-Atomen in der Alkoholkomponente, (Meth)Acrylsäure oder deren Mischungen, Itaconsäure, insbesondere von Acrylnitril und/oder Styrol.

Die Homopolymerisate der konjugierten Diene sind bevorzugt, insbesondere Polybutadien.

Die für das erfindungsgemäße Verfahren einzusetzenden fließfähigen wäßrigen Dispersionen der Homo- und Copolymerisate konjugierter Diene sind nach üblichen bekannten Verfahren und mit den üblichen bekannten Hilfsmitteln (z.B. Initiatoren, Emulgatoren, Regler, Elektrolyten, Schwermetallkatalysatoren) erhalten worden (vgl. Methoden der organischen Chemie, Houben Weyl, Band XIV/1, 1961, Seiten 630 bis 752 oder die Monographie "Emulsion Polymerisation" von D.C. Blackley, Applied Science Publishers LTD, 1975, London). Sie sind stets im wesentlichen frei von Salzen eines Alkanpolysulfonats. Ihr Feststoffgehalt liegt bei ca. 25 bis 35 Gew.-% und der mittlere Latexteilchendurchmesser bei 20 bis 150 nm, vorzugsweise 25 bis 100 nm.

Die den erfindungsgemäß einzusetzenden Salzen der Alkanpolysulfonsäuren zugrundeliegenden Alkanpolysulfonsäuren enthalten zwei oder mehr Sulfonsäuregruppen, vorzugsweise 2 bis 4, insbesondere 2 bis 3 Sulfonsäuregruppen pro Molekül. Der Alkanrest der Alkanpolysulfonsäure ist linear oder verzweigt und enthält im Mittel etwa 8 bis 22, vorzugsweise 13 bis 17 C-Atome. Vorzugsweise wird ein Gemisch der vorstehend definierten Alkanpolysulfonsäuren eingesetzt.

Als wasserlösliche Salze der Alkanpolysulfonsäuren kommen vorzugsweise Metallsalze, insbesondere Alkalimetallsalze infrage. Von den letztgenannten seien die Natrium- und Kaliumsalze genannt, insbesondere die Natriumsalze.

Die Herstellung der Alkanpolysulfonsäuren und ihrer Salze ist an sich bekannt. Beispielsweise kann man sie durch Sulfochlorierung der Alkane und anschließende Verseifung mit einer Base herstellen (vgl. Chemie und Technologie der Paraffin-Kohlenwasserstoffe, Akademie Verlag, Berlin, 1956, Seiten 395 bis 474). Durch Umsetzung der Alkanpolysulfonsäuren mit Metallhydroxid kann man zu den entsprechenden Salzen gelangen. In vielen Fällen verseift man die Alkanpolysulfochloride mit der doppelten stöchiometrischen, für die Verseifung notwendigen Menge des Metallhydroxids und erhält in einem Arbeitsgang die entsprechenden Metallsalze der Alkanpolysulfonsäure neben dem entsprechenden Metallchlorid.

Die bei der möglichst weitgehenden Sulfochlorierung und anschließenden Verseifung erhaltenen Alkanpolysulfonate enthalten in den meisten Fällen noch untergeordnete Mengen an Alkanmonosulfonaten. Diese können beispielsweise durch Extrahieren mit Diethylether oder Alkoholen abgetrennt werden. Sie können jedoch auch im Reaktionsgemisch verbleiben. Die erfindungsgemäß einzusetzenden Salze der Alkanpolysulfonate können daher bis zu 20 Gew.-% an Salzen der entsprechenden Alkanmonosulfonate enthalten. Der Begriff "Alkanpolysulfonat", verwendet in der vorliegenden Anmeldung, schließt somit auch Alkanpolysulfonate ein, die bis zu 20 Gew.-% Alkanmonosulfonat enthalten.

Die Salze der Alkanpolysulfonate können als 5 bis 65 %ige wäßrige Lösungen (Gew.-%), vorzugsweise als 8 bis 10 %ige wäßrige Lösungen, eingesetzt werden.

Die wäßrigen Lösungen der Salze der Alkanpolysulfonate werden den unter Normalbedingungen fließfähigen wäßrigen Dispersionen auf Basis von Homo- und Copolymerisaten konjugierter Diene unter möglichst intensivem Rühren nach Beendigung der Polymerisation zu einem beliebigen Zeitpunkt oder vor Beendigung der Polymerisation kontinuierlich oder diskontinuierlich zugesetzt, durch weiteres Rühren gleichmäßig verteilt, und dabei in der wäßrigen Phase der Dispersion gelöst.

Das Wasser wird der Dispersion durch übliche Verfahren wie Destillation, vorzugsweise im Vakuum, Gefriertrocknung oder Aufrahmen, Filtration, Zentrifugieren, Elektrodekantieren usw. entzogen (vgl. Houben Weyl, Methoden der organischen Chemie, Bd. XIV/1, 1961, Seiten 515-530).

Die erfindungsgemäß erhaltenen Dispersionen sind als Bindemittel für die Imprägnierung textiler Flächengebilde, für die Imprägnierung und Verfestigung von Faservliesen geeignet. Sie können auch als Vorstufen zur Herstellung schlagzäher Kunststoffe eingesetzt werden und sind sowohl chemisch als auch physikalisch agglomerierbar.

Die in den Beispielen angegebenen Teile und Prozentangaben beziehen sich auf das Gewicht, wenn nicht anders vermerkt.

**A. Herstellung eines Natriumalkanpolysulfonats (Ausgangsmaterial)**

Ein Gemisch linearer Alkane (8 bis 20 Kohlenstoffatome im Molekül, mittlere Zahl der Kohlenstoffatome ist 15) wird in Gegenwart von Licht mit einem Gasgemisch, bestehend aus 1,1 Gewichtsteil Schwefeldioxid und 1,0 Gewichtsteil Chlor bei einer Temperatur von 30 bis 40°C unter Rühren und gleichzeitigem Kühlen sulfochloriert. Die Sulfochlorierung wird so lange durchgeführt, bis das Reaktionsgemisch eine Dichte von 1,250 g/cm$^3$ bei 45°C hat. Der Sulfochlorgehalt ist dann bei 18,0 - 18,5 Gew.-%.

200 g des Sulfierungsgemisches werden tropfenweise zu 170 g 50 gew.-%iger Natronlauge gegeben, die auf 50 bis 60°C erwärmt wurde. Durch Kühlen wird das Reaktionsgemisch auf einer Temperatur von 95 bis 100°C gehalten. Nach Beendigung der Umsetzung wird das Reaktionsgemisch durch Zugabe von konzentrierter Natronlauge auf einen pH-Wert von 9 bis 10 eingestellt. Anschließend kühlt man das Reaktionsgemisch auf 60 bis 70°C ab.

In diesem Temperaturbereich fällt Natriumchlorid aus, das abfiltriert oder abzentrifugiert wird. Die vom Niederschlag befreite Lösung wird im Vakuum zur Trockne eingedampft. Man erhält hierbei ein Gemisch aus 8 g NaCl und 139 g Natriumalkansulfonat. Das Natriumalkansulfonat besteht aus:

13,2 Gew.-% Natriumalkan-monosulfonat

86,8 Gew.-% Natriumalkan-polysulfonat

Dieses Substanzgemisch (Natriumalkanpolysulfonat A-1), bestehend aus Natriumalkanpolysulfonat, Natriumalkanmonosulfonat und etwas Kochsalz, kann erfindungsgemäß ohne weitere Reinigung als wäßrige Lösung eingesetzt werden (Bezeichnung: Natriumalkanpolysulfonatlösung A-1).

Soll die Dispersion möglichst salzarm bleiben, kann ein beispielsweise nach folgender Prozedur gereinigtes Natriumalkanpolysulfonat eingesetzt werden.

Das obige Substanzgemisch (Natriumalkanpolysulfonat A-1) wird zunächst fein pulverisiert.

100 Teile des erhaltenen trockenen Pulvers werden dann mit 100 Teilen wasserfreiem Ethanol bei 40°C 120 Minuten intensiv verrührt. Dabei gehen ca. 13 % des Substanzgemisches in Lösung. Der Vorgang wird nach Absaugen des ungelöst gebliebenen Hauptanteiles mit der gleichen Ethanolmenge wiederholt. Bei der zweiten Extraktion entsteht eine ca. 8 %ige Ethanollösung.

Die beiden Ethanolextrakte enthalten das im ursprünglichen Substanzgemisch enthaltene Natriumalkanmonosulfonat sowie einen Anteil Polysulfonat.

100 Teile des mit Ethanol vorbehandelten Rückstandes werden mit 650 Teilen wasserfreiem Methanol unter intensivem Rühren 10 Stunden am Rückfluß behandelt, wonach die Lösung noch heiß vom zurückgebliebenen Kochsalz abfiltriert wird.

Das Methanolfiltrat wird im Vakuum zur Trockne eingedampft (Rotationsverdampfer), der Rückstand pulverisiert. Aus ihm können wäßrige Lösungen bereitet werden, welche erfindungsgemäß ebenfalls verwendet werden können.

**B. Herstellung einer 32 %igen Polybutadiendispersion (Ausgangsmaterial)**

In einen 40 Liter Edelstahl-Autoklaven werden unter Stickstoffatmosphäre (ca. 1 bar) bei +5°C eingefüllt:

| | |
|---|---:|
| Entionisiertes Wasser | 8 500 g |
| 5 %ige wäßrige Kaliumoleatlösung | 5 250 g |
| Kaliumsulfat, wasserfrei | 49 g |
| Eisen-II-sulfatlösung, 0,25 molar, komplexiert mit ethylendiamintetraessigsaurem Tetranatriumsalz | 10 g |
| p-Methanhydroperoxid, 50 %ige Lieferform | 15,6 g |
| n-Dodecylmercaptan | 39 g |
| Butadien | 9 500 g |

Die Polymerisation wird, sobald das System eine konstante Temperatur erreicht hat, durch Zugabe von einer Lösung, bestehend aus:

| | |
|---|---:|
| Wasser, entionisiert | 1 000 g |
| Natriumformaldehydsulfoxylat | 7,8 g |

gestartet und auf eine Temperatur von 5°C (im Latex) geregelt.

Nach Zugabe der letztgenannten Aktivatorlösung werden in einstündigem Abstand über ein Bodenventil Proben gezogen, wobei in den Probegefäßen Abstopper vorgelegt wird (ca. 50 mg Diethylhydroxylamin für eine 50 g Probe).

Der Feststoffgehalt der Proben, ihr pH-Wert, ihre elektrische Leitfähigkeit, sowie die Teilchendurchmesser sind in Tabelle 1 angegeben. Die Teilchengrößen wurden mit Hilfe der Laser-Korrelations-Spektroskopie (LKS) bestimmt (vgl. D.E. Koppel, Journal of Chemical Physics 57, 1972, S. 4814-4820). Sie liefert etwas größere Werte als die Ultrazentrifuge oder die Elektronenmikroskopie. Der Faktor, mit welchem die LKS-Durchmesser multipliziert werden müssen, um auf die nach der Ultrazentrifuge gemessenen Durchmesser aus der Teilchenzahl zu kommen, liegt bei ca. 0,85. (Zur Teilchengrößenanalyse vgl. DIN 53 206, Blatt 1, Seite 5).

Tabelle 1

| Probe Nr. | Zeit (h) Stunden | Feststoff-gehalt (Gew.-%) | Polymerisat-menge (g) | Umsatz % | Latexteilchen-durchmesser ( n m ) $1nm = 10^{-9}m$ | Teilchen-zahl im Latex | pH-Wert | Elektrische Leitfähigkeit ( mS ) mS=Millisiemens |
|---|---|---|---|---|---|---|---|---|
| 1 | 1 | 3,3 | 128 | 1,3 | – | – | 10,6 | 5,7 |
| 2 | 2 | 6,9 | 710 | 7,5 | | | | 5,3 |
| 3 | 3 | 10,3 | 1295 | 13,7 | 40 | $4,3 \times 10^{19}$ | | 5,2 |
| 4 | 4 | 13,4 | 1880 | 19,8 | 45 | $4,4 \times 10^{19}$ | 10,5 | 5,2 |
| 5 | 5 | 16,4 | 2480 | 26,1 | 46 | $5,4 \times 10^{19}$ | | 5,1 |
| 6 | 6 | 18,5 | 2925 | 30,8 | 50 | $5,0 \times 10^{19}$ | | 5,0 |
| 7 | 7 | 20,7 | 3420 | 36,0 | | | | 4,9 |
| 8 | 8 | 22,4 | 3820 | 40,2 | 52 | $6,5 \times 10^{19}$ | 10,4 | 4,8 |
| 9 | 9 | 24,2 | 4260 | 44,9 | | | | 4,7 |
| 10 | 10 | 25,9 | 4700 | 49,5 | 53 | $6,7 \times 10^{19}$ | 10,4 | 4,6 |
| 11 | 11 | 26,9 | 4970 | 52,3 | | | | 4,5 |
| 12 | 12 | 27,8 | 5215 | 54,9 | 54 | $7,0 \times 10^{19}$ | | 4,5 |
| 13 | 13 | 28,6 | 5440 | 57,3 | | | | 4,4 |
| 14 | 14 | 29,5 | 5700 | 60,0 | 55 | $7,3 \times 10^{19}$ | 10,3 | 4,3 |
| 15 | 15 | 29,8 | 5785 | 60,9 | | | | 4,3 |
| 16 | 16 | 30 | 5840 | 61,5 | | | | 4,1 |
| 17 | 19 | 32 | 6460 | 68 | 57 | $7,4 \times 10^{19}$ | 10,3 | 4,0 |

In Tabelle 1 ist ferner die Polymerisatmenge in g angegeben, welche sich durch Rechnung aus den Feststoffgehalten der Latices ergibt, sowie der Umsatz, der als Verhältnis Polymerisatmenge zu Gesamtmonomermenge, multipliziert mit 100, definiert ist.

Die Teilchenzahl im Latex berechnet sich aus der gemessenen Teilchengröße und der Polymerisatmenge. Die elektrische Leitfähigkeit wurde mit einem Gerät gemessen, welches die Leitfähigkeit von reinstem Kaliumchlorid in destilliertem Wasser wie folgt anzeigte:

$$0,0745 \text{ g KCl pro Liter; C (Mol/l)} : 10^{-3} \quad 0,12 \text{ mS}$$

$$0,746 \text{ g KCl pro Liter; C (Mol/l)} : 10^{-2} \quad 1,3 \text{ mS}$$

$$7,456 \text{ g KCl pro Liter; C (Mol/l)} : 10^{-1} \quad 11,2 \text{ mS}$$

Der Tabelle ist zu entnehmen, daß während der Polymerisation die Teilchenzahl zunächst zunimmt, um später praktisch konstant zu bleiben. Der pH-Wert sowie insbesondere die elektrische Leitfähigkeit nehmen während der Polymerisation ab.

Der so erhältliche, ca. 32 %ige, praktisch koagulatfreie Latex besitzt nach Entfernen des Restmonomeren durch Ausrühren im Vakuum (bei Zimmertemperatur) folgende kennzeichnende Daten:

pH-Wert: ca. 10 (gemessen mit geeichtem pH-Meter) bei 22°C

Elektrische Leitfähigkeit ca. 4 Millisiemens (mS) bei 22°C

Auslaufzeit: Im Auslaufbecher nach DIN 53 211 (4 mm Düse) 17 bis 18 Sekunden bei 22°C

Viskosität: ca. 30 mPas, gemessen (wie bei allen Bestimmungen in dieser Anmeldung) mit Hilfe eines Brookfield-Synchro-Lectric-Viskosimeters, Modell LVF, Präzisionsinstrument der Brookfield Engin. Laboratories Inc. und mit Hilfe der diesem Gerät beigegebenen Spindeln 1 bis 4 bei verschiedenen Umdrehungsgeschwindigkeiten (6, 12, 20, 60 Upm Umdrehungen pro Minute; Bezeichnungen Upm und Rpm werden gleichbedeutend verwendet) bei 22°C.

Das dem Latex zugrundeliegende Polymerisat ist in Toluol weitgehend löslich und besitzt eine Viskositätszahl von [η] = 3,9 [100 ml/g], gemessen in Toluol bei 25°C. Der Gelgehalt liegt bei ca. 15 %.

Latexteilchendurchmesser: 57 nm, gemessen mit der LKS, entsprechend 45-50 nm nach Ultrazentrifugenmessungen.

## C. Herstellung eines Butadien-Styrol-Latex (Ausgangsmaterial)

In einen 40 Liter Edelstahl-Autoklaven werden unter Stickstoffatmosphäre (ca. 1 bar) eingefüllt:

| | |
|---|---|
| Entionisiertes Wasser: | 12 750 g |
| Kaliumoleatlösung, 15 %ig: | 4 516 g |
| p-Methanhydroperoxid, 50 %ige Lieferform: | 25 g |
| tert. Dodecylmercaptan: | 14,4 g |
| 0,25 molare wäßrige Lösung von Eisen-II-sulfat, komplexiert mit ethylendiamintetraessigsaurem Tetranatriumsalz: | 15 g |
| Butadien: | 5 600 g |
| Styrol: | 2 400 g |

Die Polymerisation wird, sobald das System eine konstante Temperatur von +5°C erreicht hat, durch Zugabe einer Lösung, bestehend aus:

| | |
|---|---|
| Wasser, entionisiert | 1 000 g |
| Natriumformaldehydsulfoxylat | 7,8 g |

gestartet und auf +5°C, gemessen im Latex, durch Außenkühlung geregelt.

Nach Zugabe dieser letztgenannten Aktivatorlösung werden in bestimmten Abständen Proben gezogen, wobei in den Probegefäßen Abstopper vorgelegt wird (ca. 50 mg Diethylhydroxylamin für eine 50 g Probe).

Der Feststoffgehalt, die elektrische Leitfähigkeit, der Latexteilchendurchmesser der Proben, gemessen mit der LKS, werden bestimmt, daraus wird die jeweils vorliegende Polymerisatmenge (in g), der Umsatz (in %), und die Teilchenzahl im Latex berechnet (vgl. Tabelle 2).

Tabelle 2

| Probe Nr. | Zeit (h) | Feststoff (%) | Polymerisat-masse (g) | Umsatz % | LKS Latexteilchen-durchmesser (nm) | Teilchenzahl im Ansatz | Elektrische Leitfähigkeit ( mS ) |
|---|---|---|---|---|---|---|---|
| 1 | 1 | 4.1 | 40,3 | 0,5 | – | – | 3,8 |
| 2 | 3 | 6,4 | 490 | 6,1 | 37 | $2,1 \times 10^{19}$ | 3,6 |
| 3 | 4 | 9,2 | 1070 | 13,4 | 40 | $3,6 \times 10^{19}$ | 3,3 |
| 4 | 7 | 18,1 | 3175 | 39,7 | 45 | $7,5 \times 10^{19}$ | 3,3 |
| 5 | 12 | 30,3 | 6940 | 86,8 | 58 | $7,5 \times 10^{19}$ | 3,3 |
| 6 | 13 | 31,3 | 7305 | 91,3 | – | – | 3,2 |
| 7 | 14 | 32,5 | 7760 | 97,0 | 60 | $7,5 \times 10^{19}$ | 3,2 |

0 081 126

Etwa 7 1/2 Stunden nach Zugabe der Natriumformaldehydsulfoxylatlösung steigt die im Latex gemessene Temperatur trotz stetiger Außenkühlung mit Sole (ca. -15°C) an und erreicht nach ca. 9 Stunden ein Maximum bei ca. +12°C. Nach 14 Stunden ist ein Umsatz des Monomeren von 97 % erreicht und der Ansatz wird mit 10 g Diethylhydroxylamin, gelöst in 200 g Wasser, abgestoppt, abgelassen und im Vakuum bei Zimmertemperatur ausgerührt, um restliches Butadien zu entfernen.

Kennzeichnende Daten des viskosen Latex (ca. 25 kg):

| | |
|---|---|
| Koagulatanteil: | ca. 2,5 g |
| Feststoffgehalt: | 32,5 % |
| Elektrische Leitfähigkeit: | ca. 3,5 mS |
| Viskosität: | 12 900 mPas, gemessen mit Spindel 4 des Brookfield-Rotationsviskosimeters bei 6 Umdrehungen pro Minute bei 22°C. |

Das dem Latex zugrundeliegende Polymerisat ist in Toluol vorwiegend klar löslich, besitzt einen Gelanteil von ca. 5 % und eine Viskositätszahl $[\eta]$ = 3,5 [100 ml/g], gemessen bei 25°C in Toluol.

Latexteilchendurchmesser der Dispersion, gemessen mit der Laserkorrelationsspektroskopie ca. 55-60 nm, entsprechend 45 bis 50 nm mit der Ultrazentrifuge.

## Beispiel 1 (erfindungsgemäß)

100 Teile des nach B hergestellten 32 %igen Polybutadienlatex werden mit 1,6 Teilen einer 20 %igen Polysulfonatlösung gemäß A-1 unter intensivem Rühren versetzt.

Danach wird aus dieser polysulfonathaltigen Dispersion Wasser so lange im Wasserstrahlvakuum bei 50°C Innentemperatur abdestilliert, bis der Feststoffgehalt der Dispersion ca. 45 Gew.-% beträgt.

Wie aus Tabelle 3, unterer Abschnitt, hervorgeht, steigt durch die Aufkonzentrierung die Viskosität des Latex auf ca. 800 mPas, gemessen mit Hilfe des Brookfield-Viskosimeters Spindel 4 bei 6 bis 30 Upm.

Der Latex ist jedoch fließfähig und zeigt im Auslaufbecher nach DIN 53 211 (6 mm Düse) eine Auslaufzeit von 14 Sekunden. Die Latexteilchengröße wurde nicht merklich geändert und es wurde ein Wert von 57 nm für den Durchmesser nach der LKS gefunden.

## Vergleichsbeispiel 1

100 Teile des nach B hergestellten 32 %igen Polybutadienlatex werden mit 1,6 Teilen Wasser unter intensivem Rühren versetzt.

Danach wird aus dieser geringfügig mit Wasser verdünnten Dispersion Wasser so lange im Wasserstrahlvakuum abdestilliert, bis der Feststoffgehalt der Dispersion ca. 45 Gew.-% beträgt.

Wie aus Tabelle 3, mittlerer Abschnitt, hervorgeht, steigt durch die Aufkonzentrierung die Viskosität des Latex auf ca. 50 000 mPas, gemessen mit Hilfe des Brookfield-Viskosimeters Spindel 4 bei 6 Upm, bzw. 20 000 mPas bei 12 Upm. Dieser Latex ist sehr dickflüssig und läßt sich im Auslaufbecher gemäß DIN 53 211 nicht mehr messen.

Tabelle 3

| Dispersion | pH-Wert | Leitfähig-keit $\underline{/mS/}$ | Feststoff-gehalt $\underline{/\%/}$ | Spindel Nr. | Brookfield Viskosimeter, 22°C Umdrehungsgeschwindigkeit 6 Upm | 12 Upm | 30 Upm | 60 Upm | Auslaufzeit im Auslaufbecher nach DIN 53 211 sec- | Düse Ø $\underline{/mm/}$ | Latexteil-chendurch-messer nach LKS $\underline{/nm/}$ |
|---|---|---|---|---|---|---|---|---|---|---|---|
| gemäß B ohne Polysul-fonat | 10 | 4 | 32 | 2 | 30* | 30* | 30* | 30* | 17 | 4 | 57 |
| gemäß Vergleichs-beispiel 1, aufkonzentriert, ohne Polysulfo-nat | 10 | 4,3 | 45 | 4 | 50000* | 20000* | 12000* | 7000* | nicht meßbar | | 60 |
| gemäß Beispiel 1 mit Polysul-fonat (Erfin-dung) | 10 | 5,5 | 45 | 4 | 800* | 800* | 800* | 750* | 14 | 6 | 57 |

* mPas

**0 081 126**

## Beispiel 2 (erfindungsgemäß)

100 Teile des gemäß C hergestellten 32,5 %igen Latex, Viskosität ca. 13 000 mPas (gemessen mit Spindel 4 bei 6 Upm und 22°C im Brookfield-Viskosimeter) werden stufenweise mit insgesamt 0,16 Teilen festem Polysulfonat gemäß A-1 gelöst in 1,44 Teilen entionisiertem Wasser unter Rühren versetzt. Der viskose, schaumige Latex wird beim Zusatz der 10 %igen Polysulfonatlösung sofort dünnflüssig und blasenfrei.

Über die Abnahme der Viskosität beim stufenweisen Zusatz der Polysulfonatlösung (0,2 bis 1,6 Gew.-Tle.) zur 32,5 %igen Dispersion C ohne Aufkonzentrieren gibt die Tabelle 4-1 Aufschluß.

Aus Tabelle 4-2 ist einmal ersichtlich, daß nach dem Aufkonzentrieren des 32,5 %igen Latex auf 40 % Feststoff ohne Zusatz von Polysulfonat die Viskosität 56 250 mPas (Spindel 4, 6 Upm) beträgt. Das Aufkonzentrieren durch Destillation ist langwierig, da der 32,5 %ige Latex sehr feinblasig ist. Beim Aufkonzentrieren entstehen grobes Koagulat und Stippen und die Kesselwandungen belegen sich zudem mit einer Polymerisathaut.

Weiter zeigt die Tabelle 4-1, auf welchen Wert sich die Viskosität des 32,5 %igen Latex (Nullwert: 12 900 mPas) nach Zugabe von 0.2; 0.3; 0.4; 0.5; 0.6; 0.7 und 1.6 Gew.-Tln. Polysulfonatlösung (10 %ig) und nach dem Aufkonzentrieren auf 40 % jeweils eingestellt hat.

Aus dem mit 1,6 Gew.-Tln. 10 %iger Polysulfonatlösung versetzten 32,5 %igen Latex läßt sich das Wasser zügig und ohne Schaumbildung bis zu einem Feststoffgehalt von ca. 40 Gew.-% abdestillieren, wobei keine Koagulatbildung bzw. Agglomeration oder Wandbelagbildung zu beobachten ist.

Der aufkonzentrierte, ca. 40 %ige, feinteilig (55-60 nm) gebliebene Latex besitzt eine Viskosität von ca. 1600 mPas, gemessen mit Spindel 4 des Brookfield-Viskosimeters bei 6 Upm und 22°C (vgl. Tabelle 4-2) und ist fließfähig (Auslaufzeit 9 Sekunden in einem Auslaufbecher mit 8 mm Düse nach DIN 53 211).

Der Latex kann, falls erwünscht, vorteilhaft im Hochdruckhomogenisator im Druckbereich von 150 bis 250 bar oder durch Gefrieragglomeration auf der Walze agglomeriert werden, wobei Dispersionen mit Teilchengrößenmaxima von 250 bis 500 nm entstehen.

## Tabelle 4 - 1

| Dispersion | Brookfield | Ohne Zu-satz (Vergleich) 0 | Zusatz von Gew.-Tln. 10 %ige Natriumalkanpoly-sulfonatlösung gemäß A-1 zu 100 Gew.-Tln. Dispersion | | | | | | | Latexteil-chendurch-messer (LKS) |
|---|---|---|---|---|---|---|---|---|---|---|
| | | | 0,2 | 0,3 | 0,4 | 0,5 | 0,6 | 0,7 | 1,6 | $[nm]$ |
| gemäß C;<br>Beispiel 2<br>Feststoffge-<br>halt<br>32,5 % | Spindel 4, 22°C<br>Viskosität in mPas bei | | | | | | | | | |
| | 6 Upm | 12900 mPas | 6100 | 4800 | 1800 | 700 | | | 20-30 | |
| | 12 Upm | 8050 | 5100 | 4350 | 1750 | 700 | | | 20-30 | ca.<br>60 |
| | 30 Upm | 4320 | 3280 | 3080 | 1540 | 690 | | | 20-30 | |
| | 60 Upm | 2640 | 2200 | 2160 | 1200 | 710 | | | 20-30 | |
| | Auslaufbecher nach<br>DIN 53 211  22°C | Auslaufzeiten in $[sec.]$ | | | | | | | | |
| | ∅ 4 mm Düse | | | | | | | | 15 | |
| | ∅ 6 mm Düse | | | | | 14 | | | | |
| | ∅ 8 mm Düse | | | | | | | | | |

0081126

Tabelle 4 - 2

| Dispersion | Brookfield | Ohne Zu- satz (Vergleich) | Zusatz von Gew.-Tln. 10 %ige Natriumalkanpoly- sulfonatlösung gemäß A-1 zu 100 Gew.-Tln. Dis- persion | | | | | | | Latexteil- chendurch- messer (LKS) |
|---|---|---|---|---|---|---|---|---|---|---|
| | | 0 | 0,2 | 0,3 | 0,4 | 0,5 | 0,6 | 0,7 | 1,6 | $\underline{/nm\overline{/}}$ |
| gemäß C; | Spindel 4, 22°C | | | | | | | | | |
| | Viskosität in mPas bei | | | | | | | | | |
| Feststoffge- | 6 Upm | 56250 | 53000 | 41250 | 27800 | 23300 | 18400 | 11600 | 1600 | |
| halt | 12 Upm | 31000 | 28750 | 23062 | 16050 | 14050 | 11650 | 8600 | 1400 | 55 |
| 40 Gew.-% | 30 Upm | 13570 | 12675 | 10675 | 7600 | 6900 | 6000 | 4920 | 1250 | bis |
| Beispiel 2 | 60 Upm | 7420 | 7012 | 6037,5 | 4440 | 3960 | 3550 | 3040 | 1100 | 60 |
| | DIN-Auslaufbecher | Auslaufzeiten in Sekunden | | | | | | | | |
| | Ø 4 mm Düse | | | | | | | | | |
| | Ø 6 mm Düse | | | | | | | | | |
| | Ø 8 mm Düse | | | | | | | | 9,0 | |

**Patentanspruch**

Verfahren zur Herstellung einer unter Normalbedingungen fließfähigen, wäßrigen Dispersion auf Basis von Homo- und Copolymerisaten konjugierter Diene mit Feststoffgehalten von 35 bis 55 Gew.-% und durchschnittlichen Latexteilchendurchmessern von 20 bis 150 nm, dadurch gekennzeichnet, daß in einer nach üblichen Verfahren hergestellten, unter Normalbedingungen fließfähigen, von Alkanpolysulfonatsalzen freien, wäßrigen Dispersion auf Basis von Homo- und Copolymerisaten konjugierter Diene mit einem Feststoffgehalt von 25 bis 35 Gew.-%,0,05 bis 5,0 Gew.-%, bezogen auf Polymerisat, eines wasserlöslichen Salzes mindestens eines Alkanpolysulfonats gelöst und Wasser bis zum gewünschten Feststoffgehalt entzogen wird.

**Claim**

Process for the production of an aquous dispersion which is based on homo- and copolymers of conjugated dienes, is flowable under normal conditions and has solids contents of 35 to 55% by weight and average latex particle diameters of 20 to 150 nm, characterised in that 0.05 to 5.0% by weight, based on the polymer, of a water-soluble salt of at least one alkane polysulphonate is dissolved in an aqueous dispersion, which is based on homo- and copolymers of conjugated dienes, has a solids content of 25 to 35% by weight, is free from alkane polysulphonate salts, is flowable under normal conditions and has been produced by customary methods, and water is removed until the required solids content is obtained.

**Revendication**

Procédé de préparation d'une dispersion aqueuse fluide dans des conditions normales à base d'homopolymères et de copolymères de diènes conjugués avec des teneurs en matières solides de 35 à 55% en poids et des diamètres moyens de particules de latex de 20 à 150 nm, caractérisé en ce que, dans une dispersion aqueuse préparée selon des procédés habituels, fluide dans des conditions normales, exempte de sels alcane-polysulfonates et à base d'homopolymères et de copolymères de diènes conjugués avec une teneur en matières solides de 25 à 35% en poids, on dissout 0,05 à 5% en poids (calculé sur le polymère) d'un sel hydrosoluble d'au moins un alcane-polysulfonate et on élimine l'eau jusqu'à la teneur désirée en matières solides.